# EUROPÄISCHE PATENTANMELDUNG

(11) **EP 3 696 206 A1**
(43) Veröffentlichungstag der Anmeldung: **19.08.2020**
(21) Anmeldenummer: 19156628.0
(22) Anmeldetag: 12.02.2019
(51) Int. Cl.: C08G 18/48, C08G 18/73, C08G 18/79, C08G 18/38, C08G 101/00

(54) **SCHÄUMBARE, DÄMMSCHICHTBILDENDE MEHRKOMPONENTEN-ZUSAMMENSETZUNG UND DEREN VERWENDUNG**

(71) Anmelder: Hilti Aktiengesellschaft, 9494 Schaan (LI)
(72) Erfinder: Paetow, Mario, 86899 Landsberg am Lech (DE); Miller, Jekaterina, 73760 Ostfildern (DE)
(74) Vertreter: Hilti Aktiengesellschaft Corporate Intellectual Property

(57) **Zusammenfassung**

Die vorliegende Erfindung betrifft eine schäumbare, dämmschichtbildende Mehrkomponenten-Zusammensetzung auf Polyharnstoffbasis und/oder Polyurethanbasis und deren Verwendung zum Ausschäumen von Öffnungen, Kabel- und Rohrdurchführungen und Fugen zum Zwecke des Brandschutzes.

## Beschreibung

Die vorliegende Erfindung betrifft eine schäumbare, dämmschichtbildende Mehrkomponenten-Zusammensetzung auf Polyharnstoffbasis und/oder Polyurethanbasis und deren Verwendung zum Ausschäumen von Öffnungen, Kabel- und Rohrdurchführungen und Fugen zum Zwecke des Brandschutzes.

Als Bindemittel für Montage-, Isolierungs- und Brandschutzschäume werden oft Polyurethane und/oder Polyharnstoffe verwendet. Diese können z.B. als 1K-, 2K-Aerosoldose oder als 2K-Kartuschenschaum ausgebracht werden. Die Härterkomponente umfasst hierbei Isocyanate, welche unter Polyaddition mit Polyolen bzw. Polyamine unter Bildung von Polyurethanen und/oder Polyharnstoffen reagieren. Dabei kommen am häufigsten aromatische Isocyanate zum Einsatz. Diese gelten seit längerer Zeit als Risikostoff, sind H351 kennzeichnungspflichtig und sollten nur durch geschulte Anwender verwendet werden.

Ein Lösungsansatz hierfür sind die sogenannten "low-MDI-Schäume", bei denen Isocyanatpräpolymere mit einem aromatischen Isocyanatgehalt von z.B. weniger als 1% oder sogar 0,1% eingesetzt werden, wie dies beispielsweise in der DE 102010038355 A1 oder der DE 10357093 A1 beschrieben ist.

Ein anderer Lösungsansatz basiert auf der Verwendung von "modifizierten Silanen" (auch STP, silane-terminated polymer). Diese Polymere, die oft ein Polyurethan- oder Polyether-Gerüst haben, härten über Hydrolyse und Polykondensationsreaktion der Alkoxysilylgruppen aus. Derartige Schäume sind als Isolierungsschäume in Druckdosen kommerziell erhältlich. Die Dosenschäume werden im Allgemeinen über ein physikalisches Treibmittel aufgeschäumt. Solche Systeme sind beispielsweise aus der WO 2000/004069 A1, der US 2006/189705 A, der WO 2013/107744 A1 oder der WO 2013/045422 A1 bekannt.

Auch wenn aliphatische Isocyanate gegenüber aromatischen Isocyanaten keine H351-Kennzeichnungspflicht aufweisen, haben aliphatische Isocyanate im Allgemeinen eine geringere Reaktivität als aromatische Isocyanate. Demzufolge ist deren Einsatz in Brandschutzsystemen stark begrenzt. Bei einem Austausch von aromatischen Isocyanaten gegen aliphatische Isocyanate, verschlechtern sich im Allgemeinen die Eigenschaften des Brandschutzsystems. Insbesondere werden beim Einsatz von aliphatischen Isocyanaten in Brandschutzschäume unzureichende Aushärte- und Schaumsteigzeiten erreicht.

Schäume auf Basis von aromatischen Isocyanaten zeigen weiterhin unzureichende Applikationseigenschaften, da der ausgebrachte Schaum häufig so hart ist, dass dieser sich nur schlecht oder gar nicht modellieren lässt. Dementsprechend ist es für den Anwender schwierig, den ausgebrachten Schaum in die gewünschte Form zu bringen.

Der Erfindung liegt somit die Aufgabe zugrunde, Schäume, insbesondere Ortsschäume bereitzustellen, welche die genannten Nachteile der bekannten Systeme nicht aufweisen und welche für den Brandschutz geeignet sind. Insbesondere ist es Aufgabe der vorliegenden Erfindung einen Brandschutzschaum unter Verwendung von aliphatischen Isocyanaten unter Ausschluss von aromatischen Isocyanaten bereitzustellen, der eine ausreichende Aschekrustenstabilität zur Anwendung als Brandschutzschaum aufweist. Weiterhin soll der Schaum ausreichende Aushärte- und Schaumsteigzeiten zeigen und sich durch einen verbesserten Expansionsfaktor auszeichnen.

Diese Aufgabe wird durch die Mehrkomponenten-Zusammensetzung nach Anspruch 1 gelöst. Bevorzugte Ausführungsformen sind den Unteransprüchen zu entnehmen, welche wahlweise miteinander kombiniert werden können.

Gegenstand der vorliegenden Erfindung ist ferner die Verwendung der erfindungsgemäßen Mehrkomponenten-Zusammensetzung gemäß Anspruch 13.

Gegenstand der Erfindung ist demnach eine schäumbare, dämmschichtbildende Mehrkomponenten-Zusammensetzung umfassend
i) mindestens eine aliphatische Isocyanatverbindung mit einer mittleren NCO-Funktionalität von 1 oder größer,
ii) mindestens eine gegenüber Isocyanatgruppen reaktionsfähige Reaktivkomponente ausgewählt aus der Gruppe bestehend aus Verbindungen mit mindestens zwei Aminogruppe, Polyolen und Kombinationen davon,
iii) mindestens ein dämmschichtbildendes Brandschutzadditiv, sowie
iv) ein Treibmittel umfassend ein oder mehrere Verbindungen, die in der Lage sind CO₂ durch Reaktion freizusetzen,
wobei die einzelnen Bestandteile des Treibmittels vor der Verwendung der Mehrkomponenten-Zusammensetzung reaktionsinhibierend voneinander getrennt sind und die aliphatische Isocyanatverbindung von der gegenüber Isocyanatgruppen reaktionsfähigen Reaktivkomponenten reaktionsinhibierend getrennt ist.

Zum besseren Verständnis der Erfindung werden die folgenden Erläuterungen der hierin verwendeten Terminologie als sinnvoll erachtet. Im Sinne der Erfindung:
- umfasst der Begriff *"aliphatische Verbindung"* acyclische und cyclische, gesättigte oder ungesättigte Kohlenwasserstoffverbindungen, die nicht aromatisch sind (PAC, 1995, 67, 1307; Glossary of class names of organic compounds and reactivity intermediates based on structure (IUPAC Recommandations 1995));
- bedeutet *"Polyamin"* eine gesättigte, offenkenttige oder cyclische organische Verbindung, die von einer wechselnden Anzahl sekundärer Aminogruppen (-NH-) unterbrochen ist und die, insbesondere im Falle der offenkettigen Verbindungen, primäre Aminogruppen (-NH₂) an den Kettenenden aufweist;
- bedeutet *"organischer Rest"* einen Kohlenwasserstoffrest, der gesättigt oder ungesättigt, substituiert oder unsubstituiert, aliphatisch, aromatisch oder aralphatisch sein kann; wobei "araliphatisch" bedeutet, dass sowohl aromatische als auch aliphatische Reste enthalten sind.
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, bei Hitzeeinwirkung Gase freisetzt, wodurch das Volumen der Verbindung um ein Vielfaches des ursprünglichen Volumens zunimmt;
- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;
- ist ein *"Säurebildner"* eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- ist ein *"Gasbildner"* eine Verbindung, die sich bei erhöhter Temperatur unter Entwicklung inerter, d.h. nicht-brennbarer Gase zersetzt und gegebenenfalls das erweichte Bindemittel zu einem Schaum aufbläht (Intumeszenz);
- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Gasbildner, oder der physikalischen Intumeszenz gebildet wird, stabilisiert;
- stellt der Begriff *"Polyol"* eine Sammelbezeichnung für mehrwertige Alkohole dar. Insbesondere sind darunter niedermolekulare und makromolekulare Verbindungen zu verstehen, die mindestens zwei alkoholische Hydroxy-Gruppen (-OH) im Molekül enthalten (Römpp, Chemie Enzyklopädie),

Im Rahmen der vorliegenden Beschreibung wird der Begriff "Zusammensetzung" synonym für den Begriff der erfindungsgemäßen Mehrkomponenten-Zusammensetzung bzw. der schäumbaren, dämmschichtbildenden Mehrkomponenten-Zusammensetzung verwendet.

Erfindungsgemäß umfasst die Mehrkomponenten-Zusammensetzung mindestens eine aliphatische Isocyanatverbindung mit einer mittleren NCO-Funktionalität von 1 oder größer. Als Isocyanatverbindung können alle dem Fachmann bekannten aliphatischen Isocyanate mit einer mittleren NCO-Funktionalität von 1 oder größer, bevorzugt größer als 2, einzelnen oder in beliebigen Mischungen verwendet werden.

Bevorzugt sind die verwendeten aliphatischen Isocyanatverbindungen frei von aromatischen Isocyanatverbindungen. Im Sinne dieser Anmeldung bedeutet dies, dass die verwendete aliphatische Isocyanatverbindung oder eine Mischung aliphatischer Isocyanatverbindungen weniger als 10 Gew.-%, bevorzugt weniger als 5 Gew.-% und weiter bevorzugt weniger als 3 Gew.-% aromatischer Isocyanatverbindungen bezogen auf das Gesamtgewicht aller Isocyanatverbindungen in der Mehrkomponentenzusammensetzung enthält.

Bevorzugt weisen die aliphatischen Isocyanate ein Kohlenstoffgrundgerüst (ohne die enthaltenen NCO-Gruppen) von 3 bis 30, bevorzugt 4 bis 20 auf. Beispiele für aliphatische Polyisocyanate sind Bis(isocyanatoalkyl)ether oder Alkandiisocyanate, wie Propandiisocyanate, Butandiisocyanate, Pentandiisocyanate, Hexandiisocyanate (z.B. Hexamethylendiisocyanat, HDI), Heptandiisocyanate, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI) oder 3(4)-Isocyanatomethyl-1-methyl-cyclohexylisocyanat (IMCI).

Besonders bevorzugte Isocyanate sind Hexamethylendiisocyanat (HDI) und dessen Homopolymere, Trimethyl-HDI (TMDI), 2-Methylpentan-1,5-diisocyanat (MPDI), Isophorondiisocyanat (IPDI), 1 ,3-sowie 1 ,4-Bis(isocyanatomethyl)cyclohexan (H6XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H12MDI) oder Gemische dieser Isocyanate.

Die aliphatischen Isocyanate können auch in Form von Präpolymeren, Biureten, Isocyanuraten, Iminooxadiazindionen, Uretdionen und/oder Allophanate, hergestellt durch Umsetzung mit Polyolen oder Polyaminen, einzeln oder als Gemisch vorliegen und haben eine mittlere Funktionalität von 1 oder größer, bevorzugt 2 oder größer.

Beispiele geeigneter, kommerziell erhältlicher Isocyanate sind Desmodur® N 3900, Desmodur® N 100, Desmodur® N 3200, Desmodur® N 3300, Desmodur® N 3600, Desmodur® N 3800, Desmodur® 2731 , Desmodur® N 3400, Desmodur® XP 2580, Desmodur® XP 2679, Desmodur® XP 2731 , Desmodur® XP 2489, Desmodur® E 305, Desmodur® E 3370, Desmodur® XP 2599, Desmodur® XP 2617, Desmodur® XP 2406 (jeweils von der Covestro AG); Vestanat®-Produkte der Evonik; Tolonate HDB, Tolonate HDT (Rhodia; Vencorex); Duranate™ der Asahi Kasei; HDI-basierte Produkte von Tosoh/NPU; WANNATE®HDI derWanhua Basonat HB 100 und Basonat HI 100 (BASF).

Die aliphatischen Isocyanatverbindungen können jeweils einzeln oder als Gemisch zweier oder mehrerer Verbindungen eingesetzt werden.

Die Summe aller in der Mehrkomponenten-Zusammensetzung enthaltenden aliphatischen Isocyanatverbindungen beträgt bevorzugt 25 bis 55 Gew.-%, besonders bevorzugt 30 bis 50 Gew.-%, bezogen auf das Gesamtgewicht der Mehrkomponenten-Zusammensetzung.

Die gewichtsprozentualen Mengenverhältnisse der aliphatischen Isocyanatverbindung und der gegenüber Isocyanatgruppen reaktionsfähigen Reaktivkomponente wird bevorzugt so gewählt, dass das Äquivalentverhältnis von Isocyanatgruppen der Isocyanatverbindung zu gegenüber der Isocyanatgruppe reaktionsfähigen Gruppen der gegenüber Isocyanatverbindungen reaktionsfähigen Reaktivkomponente zwischen 0,3 und 1,7, bevorzugt zwischen 0,5 und 1,5 und stärker bevorzugt zwischen 0,9 und 1,4 liegt.

Erfindungsgemäß umfasst die Mehrkomponenten-Zusammensetzung mindestens eine gegenüber Isocyanatgruppen reaktionsfähige Reaktivkomponente ausgewählt aus der Gruppe bestehend aus Verbindungen mit mindestens zwei Aminogruppe, Polyolen und Kombinationen davon.

Als verwendbare Amine kommen alle Verbindungen mit mindestens zwei Aminogruppen in Betracht, wobei die Aminogruppen primäre und/oder sekundäre Aminogruppen sind, die in der Lage sind, mit Isocyanatgruppen unter Bildung einer Harnstoffgruppe (-N-C(O)-N) zu reagieren, wobei diese Verbindungen dem Fachmann bekannt sind.

In einer Ausführungsform der Erfindung ist das Amin ein Polyamin, wie z. B. 1 ,2-Diaminocyclohexan, 4,4'-Diaminodiphenylsulfon, 1,5-Diamino-2-methylpentan, Diethylentriamin, Hexamethylendiamin, Isophorondiamin, Triethylentetramin, Trimethylhexamethylendiamin und 5-Amino-1,3,3-trimethylcyclohexan-1-methylamin.

Diese Polyamine sind gegenüber Isocyanatgruppen hoch reaktiv, so dass die Reaktion zwischen der Aminogruppe und der Isocyanatgruppe innerhalb weniger Sekunden erfolgt. Aus diesem Grund ist es erfindungswesentlich, dass die Verbindungen mit mindestens zwei Aminogruppen vor der Verwendung der Mehrkomponenten-Zusammensetzung reaktionsinhibierend von der bzw. den aliphatischen Isocyanatverbindung(en) getrennt sind.

Bevorzugt werden daher Verbindungen verwendet, die weniger schnell mit den Isocyanatgruppen reagieren, wie die sogenannten Polyetherpolyamine. Die Polyetherpolyamine, auch alkoxylierte Polyamine oder Polyoxyalkenpolyamine genannt, umfassen Verbindungen mit aliphatisch gebundenen Aminogruppen, d.h. die Aminogruppen sind an die Enden eines Polyethergerüstes angebunden. Das Polyethergerüst basiert auf reinen oder gemischten Polyalkylenoxideinheiten, wie Polyethylenglykol(PEG), Polypropylenglykol(PPG). Das Polyethergerüst ist durch Umsetzung eines Dioder Trialkoholinitiators mit Ethylenoxid (EO) und/oder Propylenoxid (PO) und anschließender Umwandlung der terminalen Hydroxylgruppen zu Aminogruppen erhältlich.

Geeignete Polyetherpolyamine werden durch folgende allgemeine Formel (I) dargestellt 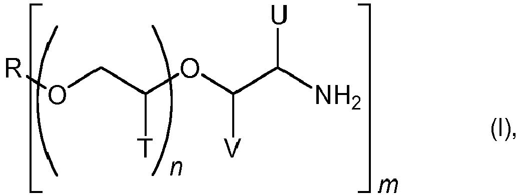 in der
- R: der Rest eines Initiators für die Oxyalkylierung ist mit 2 bis 12 Kohlenstoffatomen und 2 bis 8 Gruppen mit aktiven Wasserstoffatomen,
- T: Wasserstoff oder eine C1-C4-Alkylgruppe darstellt,
- V und U: unabhängig voneinander Wasserstoff oder T sind,
- n: ein Wert zwischen 0 und 100 ist,
- m: eine ganze Zahl zwischen 2 und 8 ist,
wobei m der Anzahl der Gruppen mit einem aktiven Wasserstoffatom entspricht, die ursprünglich in dem Initiator für die Oxyalkylierung enthalten waren.

In weiteren Ausführungsformen hat n einen Wert zwischen 35 und 100 oder weniger als 90, weniger als 80 und weniger als 70 oder weniger als 60. In einer weiteren Ausführungsform hat R 2 bis 6 oder 2 bis 4 oder 3 Gruppen mit aktiven Wasserstoffatomen, insbesondere Hydroxylgruppen. In einer anderen Ausführungsform ist R ein aliphatischer Initiator mit mehreren aktiven Wasserstoffatomen. In einer weiteren Ausführungsform sind T, U und V jeweils Methylgruppen.

Beispiele geeigneter Polyetheramine sind die von Huntsman Corporation unter der Marke JEFFAMINE® vertriebenen Polyetheramine der D-, ED-, EDR- und T- Serien, wobei die D-Serien Diamine und die T-Serie Triamine umfassen, die E-Serien Verbindungen umfassen, die ein Gerüst aufweisen, das im Wesentlichen aus Polyethylenglykol besteht, und die R-Serien hoch-reaktive Amine umfassen.

Die Produkte der D-Serien umfassen Amino-terminierte Polypropylenglykole der allgemeinen Formel (II), 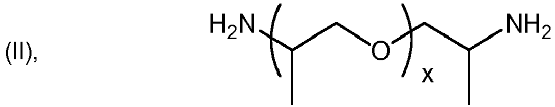 in der x eine Zahl mit einem Mittelwert zwischen 2 und 70 ist. Kommerziell erhältliche Produkte aus dieser Serie sind JEFFAMINE® D-230 (n ∼ 2,5 / Mw 230), JEFFAMINE® D-400 (n ∼ 6,1 / Mw = 430), JEFFAMINE® D-2000 (n ∼ 33 / Mw 2.000) und JEFFAMINE® D-4000 (n ∼ 68 / MW 4.000).

Die Produkte der ED-Serien umfassen Amino terminierte Polyether auf der Basis eines im Wesentlichen Polyethylenglykol-Gerüstes mit der allgemeinen Formel (III), 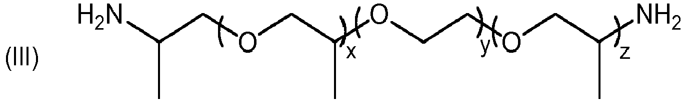 in der y eine Zahl mit einem Mittelwert zwischen 2 und 40 ist und x +z eine Zahl mit einem Mittelwert zwischen 1 und 6 ist. Kommerziell erhältliche Produkte aus dieser Serie sind: JEFFAMINE® HK511 (y = 2,0; x + z∼1,2 / Mw 220), JEFFAMINE® ED-600 (y ∼ 9,0; x + z -3,6 / Mw 600), JEFFAMINE® ED-900 (y ∼ 12,5; x + z ∼ 6,0 / Mw 900) und JEFFAMINE® ED-2003 (y ∼ 39; x + z ∼ 6,0 / Mw 2.000).

Die Produkte der EDR-Serien umfassen Amino terminierte Polyether mit der allgemeinen Formel (IV) 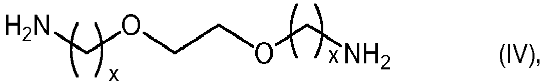 in der x eine ganze Zahl zwischen 1 und 3 ist. Kommerziell erhältliche Produkte aus dieser Serie sind: JEFFAMINE® DER-148 (x = 2 / Mw 148) und JEFFAMINE® DER-176 (x = 3 / Mw 176).

Die Produkte der T-Serien umfassen Triamine, die durch Reaktion von Propylenoxid mit einem Triol-Initiator und anschließender Aminierung der terminalen Hydroxylgruppen erhalten werden und die allgemeine Formel (V) aufweisen oder Isomere davon 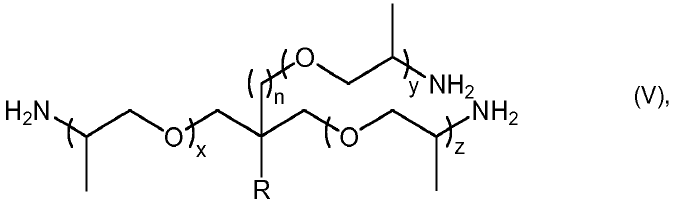 in der R Wasserstoff oder eine C₁-C₄-Alkylgruppe, bevorzugt Wasserstoff oder Ethyl ist, n 0 oder 1 ist und x + y + z die Anzahl der Mole an Propylenoxideinheiten entspricht, wobei x + y + z eine ganze Zahl zwischen etwa 4 und etwa 100, insbesondere zwischen etwa 5 und etwa 85 ist. Kommerziell erhältliche Produkte aus dieser Serie sind: JEFFAMINE® T-403 (R = C₂H₅; n = 1; x + y + z = 5-6 / Mw 440), JEFFAMINE® T-3000 (R = H; n = 0; x + y + z = 50 / Mw 3.000) und JEFFAMINE® T-5000 (R = H; n = 0; x + y + z = 85/ Mw 5.000).

Ferner sind die sekundären Amine der SD- und der ST-Serien geeignet, wobei die SD-Serien sekundäre Diamine und die ST-Serien sekundäre Triamine umfassen, die aus den obigen Serien durch reduktive Alkylierung der Aminogruppen erhalten werden, in dem die Amino-Endgruppen mit einem Keton, z.B. Aceton umgesetzt und anschließend reduziert werden, so dass sterisch gehinderte sekundäre Amino-Endgruppen mit der allgemeinen Formel (VI) erhalten werden

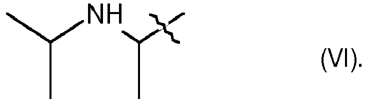

Kommerziell erhältliche Produkte aus dieser Serie sind: JEFFAMINE® SD-231 (Ausgangsprodukt D230 / Mw 315), JEFFAMINE® SD-401 (Ausgangsprodukt D-400 / Mw 515), JEFFAMINE® SD-2001 (Ausgangsprodukt D-2000 / Mw 2050) und JEFFAMINE ST-404 (Ausgangsprodukt T-403 / Mw 565).

In einer besonders bevorzugten Ausführungsform der Erfindung werden als Verbindungen mit mindestens zwei Aminogruppen Polyasparaginsäureester, die sogenannten Polyaspartics, verwendet, da deren Reaktivität gegenüber Isocyanatgruppen verglichen mit den oben beschriebenen anderen Polyaminen deutlich reduziert ist.

Geeignete Polyasparaginsäureester sind unter Verbindungen der allgemeinen Formel (VII) ausgewählt, 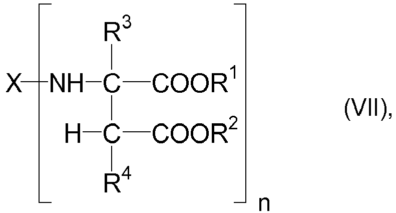 in der R¹ und R² gleich oder verschieden sein können und für organische Reste stehen, die gegenüber Isocyanatgruppen inert sind, R³ und R⁴ gleich oder verschieden sein können und für Wasserstoff oder organische Reste stehen, die gegenüber Isocyanatgruppen inert sind, X für einen n-wertigen organischen Rest steht, der gegenüber Isocyanatgruppen inert ist, und n für eine ganze Zahl von mindestens 2, bevorzugt von 2 bis 6, mehr bevorzugt von 2 bis 4 und am meisten bevorzugt von 2 steht. R¹ und R² stehen bevorzugt unabhängig voneinander für eine, gegebenenfalls substituierte Kohlenwasserstoffgruppe, bevorzugt eine C₁-C₉₋Kohlenwasserstoffgruppe und mehr bevorzugt eine Methyl-, Ethyl- oder Butylgruppe und R³ und R⁴ stehen bevorzugt jeweils für Wasserstoff.

In einer Ausführungsform steht X für eine n-wertige Kohlenwasserstoffgruppe, die durch Entfernen der Aminogruppen von einem aliphatischen oder araliphatischen Polyamin, bevorzugt durch Entfernen der primären Aminogruppen aus einem aliphatischen Polyamin, besonders bevorzugt Diamin erhalten wird. Der Begriff Polyamin umfasst in diesem Zusammenhang Verbindungen mit zwei oder mehreren primären und gegebenenfalls zusätzlichen sekundären Aminogruppen, wobei die primären Aminogruppen bevorzugt endständig sind.

In einer bevorzugten Ausführungsform steht X für einen Rest, wie er durch Entfernung der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-amionmethyl-cyclohexan, 4,4'-Diamino-dicyclohexylmethan oder 3,3'-Dimethyl-4,4'-diamino-dicyclohexylmethan, Diethylentriamin und Triethylentetramin erhalten wird und wobei n in Formel (VII) für die Zahl 2 steht.

In diesem Zusammenhang wird Bezug genommen auf die Anmeldung EP 0 403 921 A2 und EP 0 743 332 A1, deren Inhalte hiermit in diese Anmeldung aufgenommen werden.

Gemische von Polyasparaginsäureestern können ebenfalls verwendet werden.

Beispiele geeigneter Polyasparaginsäureester werden von der Covestro AG unter der Marke DESMOPHEN® vertrieben. Kommerziell erhältliche Produkte sind beispielsweise: DESMOPHEN® NH 1220, DESMOPHEN® NH 1420 und DESMOPHEN® NH 1520.

Die beschriebenen Verbindungen mit mindestens zwei Aminogruppen können je nach gewünschter Reaktivität einzeln oder als Gemisch verwendet werden. Dabei können insbesondere die Polyamine als verbrückende Verbindungen dienen, wenn diese zusätzlich zu den Polyetherpolyaminen oder den Polyasparaginsäureestern verwendet werden.

Werden als gegenüber Isocyanatverbindungen reaktionsfähige Reaktivkomponente Polyole eingesetzt, kommen alle Verbindungen mit zwei oder mehreren Hydroxylgruppen in Betracht. Bevorzugt ist das Polyol aufgebaut aus einem Grundgerüst aus Polyester, Polyether, Polyurethan und/oder Alkanen oder Mischungen aus diesen. Das Grundgerüst kann linear oder verzweigt aufgebaut sein und die funktionellen Hydroxylgruppen terminal und/oder entlang der Kette enthalten.

In einer bevorzugten Ausführungsform enthält das Polyol ein oder mehrere Polyesterpolyole. Bevorzugt sind die Polyesterpolyole ausgewählt aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Weiterhin sind die Polyesterpolyole ausgewählt aus Polyacrylatpolyolen, wie Copolymerisate von Estern der Acryl- und/oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/oder Hydroxypropylmethacrylat eingeführt.

Weiterhin sind die Polyesterpolyole ausgewählt aus Polycarbonatpolyolen. Verwendbare Polycarbonatpolyole sind Hydroxylgruppen aufweisende Polycarbonate, wie zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit CO₂ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen.

Statt oder zusätzlich zu reinen Polycarbonatdiolen können auch Polyetherpolycarbonatdiole eingesetzt werden.

Weiterhin sind die Polyesterpolyole ausgewählt aus Polycaprolactonpolyolen, hergestellt durch ringöffnende Polymerisation von ε-Caprolacton mit mehrfachfunktionellen Alkoholen, wie Ethylenglykol, 1 ,2-Propandiol, Glycerin und Trimethylolpropan.

Stärker bevorzugt sind außerdem Polyetherpolyole ausgewählt aus Additionsprodukten von z.B. Ethylen und/oder Propylenoxid und mehrfachfunktionellen Alkoholen wie z.B. Ethylenglykol, 1,2-Propandiol, Glycerin und/oder Trimethylolpropan.

Stärker bevorzugt sind außerdem Polyurethanpolyole, hergestellt aus Polyaddition von Diisocyanaten mit überschüssigen Mengen Di- und/oder Polyolen.

Stärker bevorzugt sind außerdem di- oder mehrfunktionelle Alkohole, ausgewählt aus C₂- C₁₀-Alkoholen mit den Hydroxylgruppen an den Enden und/oder entlang der Kette.

Am stärksten bevorzugt sind oben genannte Polyesterpolyole, Polyetherpolyole und C2-C₁₀-Alkohole, die di- und/oder trifunktionell und/oder tetrafunktionell sind.

Beispiele geeigneter Polyesterpolyole umfassen DESMOPHEN® 1100, DESMOPHEN® 1652, DESMOPHEN® 1700, DESMOPHEN® 1800, DESMOPHEN® 670, DESMOPHEN® 800, DESMOPHEN® 850, DESMOPHEN® VP LS 2089, DESMOPHEN® VP LS 2249/1 , DESMOPHEN® VP LS 2328, DESMOPHEN® VP LS 2388, DESMOPHEN® XP 2488 (Covestro AG), K-FLEX XM-360, K-FLEX 188, K-FLEX XM-359, K-FLEX A308 und K-FLEX XM- 332 (King Industries).

Beispiele geeigneter kommerziell erhältlicher Polyetherpolyole umfassen: ACCLAIM® POLYOL 12200 N, ACCLAIM® POLYOL 18200 N, ACCLAIM® POLYOL 4200, ACCLAIM® POLYOL 6300, ACCLAIM® POLYOL 8200 N, ARCOL® POLYOL 1070, ARCOL® POLYOL 1 105 S, DESMOPHEN® 1 1 10 BD, DESMOPHEN® 1 11 1 BD, DESMOPHEN® 1262 BD, DESMOPHEN® 1380 BT, DESMOPHEN® 1381 BT, DESMOPHEN® 1400 BT, DESMOPHEN® 2060 BD, DESMOPHEN® 2061 BD, DESMOPHEN® 2062 BD, DESMOPHEN® 3061 BT, DESMOPHEN® 401 1 T, DESMOPHEN® 4028 BD, DESMOPHEN® 4050 E, DESMOPHEN® 5031 BT, DESMOPHEN® 5034 BT, DESMOPHEN® 10WF15, DESMOPHEN® 10WF16, DESMOPHEN® 10WF18, DESMOPHEN® 5168T und DESMOPHEN® 5035 BT (Bayer; Covestro); Lupranol 2043, Lupranol 2048, Lupranol 2090, Lupranol 2092, Lupranol 2095, Pluriol E600 (BASF); Voranol CP 755, Voranol RA 800, Voranol CP 6001, Voranol EP 1900 (Dow) oder Mischungen aus Polyester und Polyetherpolyolen wie WorleePol 230 (Worlee).

Beispiele geeigneter Alkohole umfassen Ethandiol, Propandiol, Propantriol, Butandiol, Butantriol, Pentandiol, Pentantriol, Hexandiol, Hexantriol, Heptandiol; Heptantriol, Octandiol, Octantriol, Nonandiol, Nonantriol, Decandiol und Decantriol.

In einer bevorzugten Ausführungsform umfasst die Mehrkomponenten-Zusammensetzung eine Mischung aus einer oder mehreren Verbindungen mit zwei Aminogruppen und einen oder mehreren Polyolen. Besonders bevorzugt ist eine Mischung aus einem oder mehreren Polyolen mit einem oder mehreren Polyasparaginsäureestern., wobei insbesondere eine Mischung aus einem oder mehreren Polyasparaginsäureestern mit Triolen und/oder Tetraolen bevorzugt ist.

Bevorzugt beträgt das Verhältnis der OH-Gruppen des Polyols und der NH-Gruppen der Verbindung mit mindestens zwei Aminogruppen OH:NH 0,05 eq : 0,95 eq bis 0,6 eq : 0,4 eq, stärker bevorzugt im Verhältnis 0,1 eq : 0,9 eq bis 0,5 eq : 0,5 eq und am stärksten bevorzugt im Verhältnis 0,2 eq : 0,8 eq bis 0,4 eq : 0,6 eq eingesetzt.

Bevorzugt wird ein Katalysator für die Reaktion der aliphatischen Isocyanatverbindung mit der gegenüber Isocyanatgruppen reaktiven Reaktivkomponente verwendet.

Vorzugsweise wird der Katalysator unter Aminen, zinnhaltigen Verbindungen, bismuthaltigen Verbindungen, zirkoniumhaltigen Verbindungen, aluminiumhaltigen Verbindungen oder zinkhaltigen Verbindungen ausgewählt ist. Bevorzugt handelt es sich hierbei um Zinnoctoat, Zinnoxalat, Zinnchlorid, Dioctylzinndi-(2-ethylhexanoat), Dioctylzinndilaurat, Dioctylzinndithioglykolat, Dibutylzinndilaurat, Monobutylzinntris-(2-ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, Bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamin, *N,N*-Dimethylcyclohexylamin, *N,N-*Dimethylethanolamin, *N-*(*3-* Dimethylaminopropyl)-*N,N*-diisopropanolamin, *N-*Ethylmorpholin, *N*-Methylmorpholin, Pentamethyldiethylentriamin und/oder Triethylendiamin. Beispiele geeigneter Katalysatoren sind Borchi® Kat 24, Borchi® Kat 320, Borchi® Kat 15 (Borchers), TIB KAT 129, TIB KAT P129, TIB KAT 160, TIB KAT 162, TIB KAT 214, TIB KAT 216, TIB KAT 218, TIB KAT 220, TIB KAT 232, TIB KAT 248, TIB KAT 248 LC, TIB KAT 250, TIB KAT 250, TIB KAT 256, TIB KAT 318, TIB Si 2000, TIB KAT 716, TIB KAT 718, TIB KAT 720, TIB KAT 616, TIB KAT 620, TIB KAT 634, TIB KAT 635, (TIB Chemicals), K-KAT® XC-B221 , K-KAT® 348, K-KAT® 4205, K-KAT® 5218, K-KATO XK-635, K-KAT® XK-639, K-KATO XK-604, K-KAT®XK-618 (King Industries), JEFFCAT® DMAPA, JEFFCAT® DMCHA, JEFFCAT® DMEA, JEFFCAT® DPA, JEFFCAT® NEM, JEFFCAT® NMM, JEFFCAT® PMDETA, JEFFCAT® TD-100 (Huntsman) und DABCO 33LV (Sigma Aldrich). Besonders bevorzugt umfasst die Mehrkomponenten-Zusammensetzung mindestens eine zinnhaltige Verbindung als Katalysator.

Erfindungsgemäß enthält die Zusammensetzung ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in der Mehrkomponenten-Zusammensetzung enthalten sein, nämlich bevorzugt in einer Menge von 10 bis 70 Gew.-% bezogen auf das Gesamtgewicht der Mehrkomponenten-Zusammensetzung. Wird die isolierende Schicht durch physikalische Intumeszenz gebildet, ist das dämmschichtbildende Additiv vorzugsweise in einer Menge von 10 bis 40 Gew.-% bezogen auf das Gesamtgewicht der Mehrkomponenten-Zusammensetzung enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 35 Gew.-% und besonders bevorzugt 15 bis 30 Gew.-%, bezogen auf das Gesamtgewicht der Mehrkomponenten-Zusammensetzung.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TCPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Erfindungsgemäß enthält die Zusammensetzung ein Treibmittel, welches ein oder mehrere Verbindungen umfasst, die in der Lage sind durch Reaktion Kohlendioxid (CO₂) freizusetzen. Als Treibmitteln sind alle gängigen chemischen Treibmittel geeignet, die durch chemische Reaktion zwischen zwei Bestandteilen Kohlendioxid freisetzen. Erfindungsgemäß sind die einzelnen Bestandteile des Treibmittels vor der Verwendung der Zusammensetzung reaktionsinhibierend voneinander getrennt.

In der einfachsten Ausgestaltung der Erfindung umfasst das Treibmittel Wasser bzw. besteht aus Wasser, welches nach Vermischen mit aliphatischem Isocyanat Kohlendioxid freisetzt. Der gewichtsprozentuale Anteil des Wassers beträgt vorzugsweise 0,1 bis 10 Gew.-%, bevorzugter 0,2 bis 8 Gew.-% und weiter bevorzugt 0,2 bis 6 Gew.-% bezogen auf das Gesamtgewicht der Mehrkomponenten-Zusammensetzung.

In einer bevorzugten Ausführungsform umfasst die Mehrkomponenten-Zusammensetzung einen Schaumkatalysator, der die Reaktion des aliphatischen Isocyanats mit Wasser unter Bildung von Kohlendioxid katalysiert. Vorzugsweise werden hierbei N,N,N'-trimethyl-N'-hydroxyethylbisaminoethylether (Jeffcat ZF-10), Bis-(2-dimethylaminoethyl)ether (Jeffcat ZF-20), 70% Bis-(2-dimethylaminoethyl)ether in dipropylene glycol (Jeffcat ZF-22), N-[2-[2-(dimethylamino)ethoxy]ethyl]-N-methyl-1,3-Propanediamine (Dabco NE300) eingesetzt.

In einer anderen Ausführungsform umfasst das Treibmittel eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quarternäre) Ammoniumcarbonate verwendet werden, wie Carbonate von Alkali - oder Erdalkalimetallen, zum Beispiel CaCO₃, NaHCO₃, Na₂CO₃, K₂CO₃, (NH₄)₂CO₃ und dergleichen, wobei Kreide (CaCO₃) bevorzugt ist. Dabei können verschiedene Typen von Kreiden mit unterschiedlichen Korngrößen und unterschiedlicher Oberflächenbeschaffenheit, wie beispielsweise beschichtete oder unbeschichtete Kreide, oder Mischungen von zwei oder mehreren davon verwendet werden. Bevorzugt werden beschichtete Kreidetypen verwendet, da sie langsamer mit der Säure reagieren und somit kontrolliertes Aufschäumen bzw. abgestimmte Aufschäumungs- und Aushärtezeit gewährleisten.

Als Säure kann jede saure Verbindung verwendet werden, die in der Lage ist, mit carbonat- oder hydrogecarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

Um dem gebildeten Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren erreicht. Die Schäume haben im Allgemeinen Dichten von ca. 100-300 g/cm³, bevorzugt von 110 bis 210 g/L, gemessen gemäß DIN EN ISO 845.

Sofern erforderlich kann die erfindungsgemäße Zusammensetzung daher ferner einen Schaumstabilisator enthalten. Als Schaumstabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1 -Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt.

Die Schaumstabilisatoren können in irgendeiner der Komponenten der erfindungsgemäßen Zusammensetzung enthalten sein, so lange diese nicht miteinander reagieren.

In einer Ausführungsform enthält die erfindungsgemäße Zusammensetzung ferner mindestens einen weiteren Bestandteil, ausgewählt unter Weichmachern, Vernetzungsmitteln, Bioziden, organischen und/oder anorganischen Zuschlagstoffen und/oder weiteren Additiven enthält.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C₁₀-C₂₁-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerin mit Epoxidgruppen und Esterderivate der Phosphate. Stärker bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und *n*-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 30 Gew.-%, weiter bevorzugt bis zu 20 Gew.-% und stärker bevorzugt bis zu 8 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder MehrkomponentenSystem konfektioniert sein, wobei der Begriff Mehrkomponentensystem auch Zweikomponentensysteme mit umfasst. Die Zusammensetzung ist bevorzugt als Zweikomponenten-System konfektioniert, in dem die einzelnen Bestandteile des Treibmittels vor der Verwendung der Zusammensetzung reaktionsinhibierend voneinander getrennt sind und die aliphatischen Isocyanatverbindungen vor der Verwendung der erfindungsgemäßen Zusammensetzung reaktionsinhibierend von der gegenüber Isocyanatgruppen reaktiven Reaktivkomponente getrennt sind.

Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben. Das dämmschichtbildende Brandschutzadditiv kann dabei als Gesamtmischung oder in Einzelkomponenten aufgeteilt in einer Komponente oder mehreren Komponenten enthalten sein. Die Aufteilung erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Gegenstand der Erfindung ist ferner die Verwendung einer erfindungsgemäßen Zusammensetzung zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

Gegenstand der Erfindung ist ferner ein Verfahren zur Schaumstoffherstellung, bei dem die Komponenten der Mehrkomponenten-Zusammensetzung am oder nahe am Anwendungsort miteinander vermischt werden und die Mischung am gewünschten Ort, beispielsweise in eine Fuge, Öffnung oder Spalte, in einen Hohlraum oder auf eine Fläche, ein- oder aufgebracht wird. Hierbei handelt es sich um sogenannte Ortschäume.

Gegenstand der Erfindung sind ferner Formkörper, die durch das eben beschriebene Verfahren erhältlich sind, wobei die Schaumstoffherstellung beispielsweise in einer Form erfolgen kann. Denkbar ist hier die Verwendung eines Formkörpers zur Herstellung von Formkörpern, die in Maueröffnungen, z.B. Kabelschotte, eingesetzt werden. Bevorzugt ist auch die Verwendung für Kabel-, Rohr-, Stromschienen- und/oder Fugenabschottungen. Sie können auch bevorzugt als Dichtungen zum Brandschutz und zur Herstellung von Brandschutzklebmassen, zum Beschichtung von Oberflächen und zur Herstellung von Sandwichbauteilen oder Verbundplatten verwendet werden.

Die Formkörper schäumen im Brandfall auf und so wird eine Flammenausbreitung verhindert und sind somit als Dichtelemente, Sicherungsvorrichtungen, Brandsperren oder Verkleidungen geeignet. Man kann diese somit als Verfugungen, Verschlüsse für Kabeldurchbrüche, zum Verschließen von Maueröffnungen verwenden. Auch die Verwendung eines Brandschutzelements als Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten.

Die Erfindung wird nachstehend anhand einiger Beispiele näher erläutert

### AUSFÜHRUNGSBEISPIELE

Zur Herstellung der erfindungsgemäßen Zusammensetzungen 1 bis 3 und der Vergleichszusammensetzungen V1 bis V3 wurden die Polyol(e) und/oder der Polyasparaginsäureester mit Wasser, Katalysatoren, Schaumstabilisator und Feststoffen vermischt. Anschließend wurde die Isocyanatkomponente hinzugegeben und die Mischung wurde für 20s gerührt. Alternativ wurden die die Polyol(e), der Polyasparaginsäureester, Wasser, Katalysatoren, Schaumstabilisator und Feststoffe getrennt von der Isocyanatkomponente in eine handelsübliche 2K-Kartusche überführt und der Schaum wurde durch einen Statikmischer ausgepresst.

**Tabelle 1: Bestandteile der erfindungsgemäßen Zusammensetzungen 1 bis 3 [Gew.-%]**

| **Bestandteil** | **1** | **2** | **3** |
|---|---|---|---|
| Aliphatisches Isocyanat¹⁾ | 31,30 | 48,94 | 29,64 |
| Polyasparaginsäureester ²⁾ | 39,90 | - | 22,67 |
| Polyol 1³⁾ | - | 16,20 | - |
| Polyol 2⁴⁾ | - | - | 18,89 |
| Aminopolyol⁵⁾ | - | 10,80 | - |
| Wasser | 5,60 | 0,40 | 5,60 |
| Schäumungskatalysator ⁶⁾ | 1,60 | 0,80 | 1,60 |
| Schaumstabilisator ⁷⁾ | 1,60 | 1,95 | 1,60 |
| Fungizid ⁸⁾ | 0,08 | 0,08 | 0,08 |
| Ammoniumpolyphosphat ⁹⁾ | 3,04 | 3,06 | 3,04 |
| Blähgraphit ¹⁰⁾ | 15,62 | 15,7 | 15,62 |
| Eisenoxid (Fe₂O₃)¹¹⁾ | 1,26 | 1,27 | 1,26 |
| Gelierungskatalysator 1 ¹²⁾ | - | 0,27 | - |
| Gelierungskatalysator 2 ¹³⁾ | - | 0,54 | - |
| Dichte [g/L] | 207 | 188 | 119 |

| | | | |
|---|---|---|---|
| ¹⁾ Desmodur N 3600 der Covestro, Deutschland ²⁾ Desmophen NH 1420 der Covestro, Deutschland ³⁾ Pluriol E 600 der BASF ⁴⁾ Voranol CP 755 der Dow ⁵⁾ Voranol RA 800 der Dow ⁶⁾ Jeffcat ZF-10 der Huntsmann Corporation ⁷⁾ Dabco DC 198 der Evonik ⁸⁾ Actidide MKP der Thor, Speyer, Deutschland ⁹⁾ Exolit® AP 462 der Clariant; ¹⁰⁾ Mischung aus 84% Nord-Min® 351 und 16% Nord-Min® 20 der Nordmann-Rassmann, Hamburg, Deutschland; ¹¹⁾ Bayferrox 130 M der Lanxess ¹²⁾ Dabco 33-LV der Evonik ¹³⁾ TIB KAT 216 derTIB Chemicals | | | |

**Tabelle 2: Bestandteile der Vergleichszusammensetzungen V1 bis V3 [in Gew.-%]**

| **Bestandteil** | **V1** | **V2** | **V3** |
|---|---|---|---|
| Aromatisches Isocyanat ¹⁾ | 27,16 | 41,94 | 26,13 |
| Polyasparaginsäureester ²⁾ | 47,64 | - | 27,51 |
| Polyol 1 ³⁾ | - | 20,67 | - |
| Polyol 2⁴⁾ | - | - | 22,92 |
| Aminopolyol ⁵⁾ | - | 13,78 | - |
| Wasser | 2,80 | 0,29 | 1,60 |
| Schäumungskatalysator ⁶⁾ | 0,80 | 0,66 | 0,24 |
| Schaumstabilisator ⁷⁾ | 1,60 | 2,49 | 1,60 |
| Fungizid ⁸⁾ | 0,08 | 0,08 | 0,08 |
| Ammoniumpolyphosphat ⁹⁾ | 3,04 | 3,03 | 3,04 |
| Blähgraphit ¹⁰⁾ | 15,62 | 15,57 | 15,62 |
| Eisenoxid (Fe₂O₃)¹¹⁾ | 1,26 | 1,26 | 1,26 |
| Gelierungskatalysator 1 ¹²⁾ | - | 0,22 | - |
| Gelierungskatalysator 2 ¹³⁾ | - | - | - |
| Dichte [g/L] | 148 | 132 | 138 |

| | | | |
|---|---|---|---|
| ¹⁾ Desmodur 44V der Covestro, Deutschland ²⁾ Desmophen NH 1420 der Covestro, Deutschland ³⁾ Pluriol E 600 der BASF ⁴⁾ Voranol CP 755 der Dow ⁵⁾ Voranol RA 800 der Dow ⁶⁾ Jeffcat ZF-10 der Huntsmann Corporation ⁷⁾ Dabco DC 198 der Evonik ⁸⁾ Actidide MKP der Thor, Speyer, Deutschland ⁹⁾ Exolit® AP 462 der Clariant; ¹⁰⁾ Mischung aus 84% Nord-Min® 351 und 16% Nord-Min® 20 der Nordmann-Rassmann, Hamburg, Deutschland; ¹¹⁾ Bayferrox 130 M der Lanxess ¹²⁾ Dabco 33-LV der Evonik | | | |

### Bestimmung der Expansionsfaktoren

Zur Bestimmung der Expansionsfaktoren wurden sowohl die erfindungsgemäßen Mehrkomponenten-Zusammensetzung gemäß Beispiel 1 bis 3 und die Vergleichszusammensetzungen V1 bis V3 frei geschäumt. Aus den freigeschäumten Schäumen wurde jeweils eine zylindrische Probe mit Durchmesser von 4,5 cm und Höhe von 2 cm ausgestanzt. Diese wurde in einem M-TMA-Gerät (Makro-TMA 2 der ASG Analytik-Service in Zusammenarbeit mit Hilti; Baujahr 2004) unter Auflast von 100 g mit 15 K/min auf 620 °C erhitzt. Es wurde der Rückstand in Gew.% und der Expansionsfaktor bezogen auf die ursprüngliche Probe gemessen.

Die Stabilität der erhaltenen Aschenkruste wurde mit einem Texture Analyzer (CT3 von Brookfield) bestimmt. Dafür wurde die Probe mit einem T7-Element mit einer konstanten Geschwindigkeit von 0.5 mm/s penetriert. Die darauf verwendete Kraft wurde als Funktion der Penetrationstiefe gemessen. Je höher die Kraft, desto härter die Aschenkruste. Es konnte gezeigt werden, dass alle erfindungsgemäßen Zusammensetzungen eine ausreichende Aschekrustenstabilität aufweisen.

**Tabelle 3: Ergebnisse der Bestimmung des Expansionsfaktors in M-TMA**

| | **Rückstand [Gew.-%]** | **Expansionsfaktor** |
|---|---|---|
| Beispiel 1 | 23 | 1,6 |
| Beispiel 2 | 19,5 | 1,4 |
| Beispiel 3 | 20,5 | 1,5 |
| Beispiel V1 | 30 | 1,6 |
| Beispiel V2 | 31 | 1,4 |
| Beispiel V3 | 30,1 | 1,2 |

Wie aus Tabelle 3 zu entnehmen ist, liefern die erfindungsgemäßen Zusammensetzungen bei einem geringeren Rückstand mindestens den gleichen Expansionsfaktor, so dass die erfindungsgemäßen Zusammensetzungen insgesamt einen verbesserten Expansionsfaktor zeigen.
Ferner haben alle erfindungsgemäßen Brandschutzschäume hervorragende Applikationseigenschaften. Der ausgebrachte Schaum zeigt eine ausreichende Flexibilität, so dass der Anwender den Schaum modellieren kann und in die gewünschte Form bringen kann bevor die Aushärtung stattgefunden hat.

## Patentansprüche

1. Schäumbare, dämmschichtbildende Mehrkomponenten-Zusammensetzung umfassend
i) mindestens eine aliphatische Isocyanatverbindung mit einer mittleren NCO-Funktionalität von 1 oder größer,
ii) mindestens eine gegenüber Isocyanatgruppen reaktionsfähige Reaktivkomponente ausgewählt aus der Gruppe bestehend aus Verbindungen mit mindestens zwei Aminogruppen, Polyolen und Kombinationen davon,
iii) mindestens ein dämmschichtbildendes Brandschutzadditiv, sowie
iv) ein Treibmittel umfassend ein oder mehrere Verbindungen, die in der Lage sind durch Reaktion CO₂ freizusetzen,
wobei die einzelnen Bestandteile des Treibmittels vor der Verwendung der Mehrkomponenten-Zusammensetzung reaktionsinhibierend voneinander getrennt sind und die mindestens eine aliphatische Isocyanatverbindung reaktionsinhibierend von der gegenüber Isocyanatgruppen reaktionsfähigen Reaktivkomponenten getrennt ist.

2. Zusammensetzung nach Anspruch 1, wobei das Treibmittel Wasser umfasst.

3. Zusammensetzung nach Anspruch 1 oder 2, wobei die gegenüber Isocyanatverbindungen reaktionsfähige Reaktivkomponente unter Polyaminen, Polyetherpolyaminen und Polyasparaginsäureestern oder einem Gemisch davon ausgewählt ist.

4. Zusammensetzung nach Anspruch 3, wobei die gegenüber Isocyanatverbindungen reaktionsfähige Reaktivkomponente mindestens einen Polyasparaginsäureester der allgemeinen Formel (VII) umfasst, 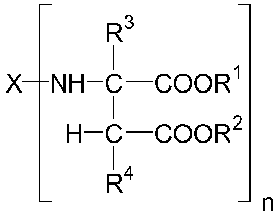 in der
R¹ und R² gleich oder verschieden sein können und für organische Reste stehen, die gegenüber Isocyanatgruppen inert sind,
R³ und R⁴ gleich oder verschieden sein können und für Wasserstoff oder organische Reste stehen, die gegenüber Isocyanatgruppen inert sind,
X für einen n-wertigen organischen Rest steht, der gegenüber Isocyanatgruppen inert ist, und
n für eine ganze Zahl von mindestens 2 steht.

5. Zusammensetzung nach Anspruch 3 oder 4, wobei die gegenüber Isocyanatverbindungen reaktionsfähige Reaktivkomponente ferner mindestens ein Polyol umfasst.

6. Zusammensetzung nach Anspruch 5, wobei das Polyol unter Polyesterpolyolen, Polyetherpolyolen, hydroxylierten Polyurethanen und/oder Alkanen mit jeweils mindestens zwei Hydroxylgruppen pro Molekül ausgewählt ist.

7. Zusammensetzung nach einem der vorhergehenden Ansprüche, wobei die Mengenverhältnisse der aliphatischen Isocyanatverbindung und der gegenüber Isocyanatverbindungen reaktionsfähige Reaktivkomponente so gewählt sind, dass das Äquivalentverhältnis von Isocyanatgruppen der Isocyanatverbindung gegenüber der gegenüber Isocyanatverbindungen reaktionsfähigen Reaktivkomponente zwischen 0,3 und 1,7 liegt.

8. Zusammensetzung nach einem der vorhergehenden Ansprüche, wobei die Zusammensetzung ferner einen Katalysator für die Reaktion zwischen der Isocyanatverbindung und der gegenüber Isocyanatverbindungen reaktionsfähigen Reaktivkomponente enthält.

9. Zusammensetzung nach einem der vorhergehenden Ansprüche, wobei das dämmschichtbildende Brandschutzadditiv aus Graphit-Interkallationsverbindungen, blähfähigem silikatischen Material oder Kombinationen davon ausgewählt ist.

10. Zusammensetzung nach Anspruch 9, wobei das dämmschichtbildende Brandschutzadditiv ferner einen Aschekrustenstabilisator enthält.

11. Zusammensetzung nach einem der vorhergehenden Ansprüche, wobei die Zusammensetzung ferner einen Schaumstabilisator enthält.

12. Zusammensetzung nach einem der vorhergehenden Ansprüche, wobei die Zusammensetzung ferner mindestens einen weiteren Bestandteil enthält, der aus der Gruppe bestehend aus Weichmachern, anorganischen Füllstoffen und/oder weiteren Additiven ausgewählt ist.

13. Verwendung einer Zusammensetzung nach einem der Ansprüche 1 bis 12 zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

14. Formkörper erhalten aus einer Zusammensetzung nach einem der Ansprüche 1 bis 12, wobei die jeweiligen Komponenten miteinander vermischt und die Mischung in einer Form aufgeschäumt werden.
